# EUROPÄISCHE PATENTSCHRIFT

(11) **EP 4 159 416 B1**
(45) Veröffentlichungstag und Bekanntmachung des Hinweises auf die Patenterteilung: **14.02.2024**
(21) Anmeldenummer: 22195668.3
(22) Anmeldetag: 14.09.2022
(51) Int. Cl.: B29C 65/16, B01D 53/50, B01D 53/68, B01D 53/83, B01D 46/71, B01D 53/34

(54) **VERFAHREN ZUR ABGASBEHANDLUNG VON ABGASEN, DIE BEI EINER THERMISCHEN BE-ARBEITUNG VON KUNSTSTOFF FREIGESETZT WERDEN**
METHOD FOR TREATING EXHAUST GASES RELEASED DURING THERMAL TREATMENT OF PLASTIC
PROCÉDÉ DE TRAITEMENT DES GAZ D'ÉCHAPPEMENT ISSUS D'UN TRAITEMENT THERMIQUE DE MATIÈRE PLASTIQUE

(30) Priorität: 29.09.2021 DE 102021210871
(43) Veröffentlichungstag der Anmeldung: 05.04.2023
(73) Patentinhaber: ULT AG, 02708 Löbau (DE)
(72) Erfinder: Berger, Madeleine, 02733 Cunewalde (DE); Reichmann, Andreas, 02788 Hirschfelde (DE)
(74) Vertreter: Pfenning, Meinig & Partner mbB

(56) Entgegenhaltungen:
- EP-A1- 2 638 952
- EP-A2- 1 275 430
- WO-A1-2006/099948
- WO-A1-2018/055555
- DE-A1-102013 008 233
- DE-A1-102014 207 160

## Beschreibung

Die Erfindung betrifft ein Verfahren zur Abgasbehandlung von Abgasen, die bei einer thermischen Bearbeitung von Kunststoff freigesetzt werden. Die Erfindung kann bevorzugt bei Einsatz elektromagnetischer Strahlung, insbesondere Laserstrahlung, bei der thermischen Behandlung eingesetzt werden.

Durch einen Energieeintrag werden Komponenten des jeweiligen Kunststoffes zersetzt und es bilden sich chemische Verbindungen je nach eingesetztem Kunststoff. Bei einigen Kunststoffen kann sich dabei auch mindestens eine Säure bilden, die bei einer zwangsweise erfolgenden Abkühlung dann kondensiert und in der flüssigen Phase im abgesaugten Abgas als kleine Säuretropfen mitgeführt wird. Im abgesaugten Abgas können auch Partikel fester Phasen enthalten sein, so dass eine Filterung der Partikel durchgeführt werden muss, um die Partikel aus dem Abgas zu separieren. Außerdem werden wieder kondensierte Kunststoffbestandteile mit dem Abgas abgeführt, die ebenfalls aus dem Abgas separiert werden müssen.

Die im Abgas enthaltene Säure kann nicht ohne weiteres in die Umgebung abgegeben werden. Außerdem führt die Säure dazu, dass die nutzbare Betriebsdauer der eingesetzten Filterelemente reduziert und deren Funktionalität negativ beeinträchtigt wird.

WO 2018/055555 A1 offenbart die Behandlung eines HCl enthaltenden, durch Pyrolyse von Kunststoff entstehenden Abgasstroms, wobei Sauergasbestandteile in einem Nasswäscher, z.B. mit Natronlauge/Kalilauge, entfernt werden; das gereinigte Abgas kann danach einer weiteren Behandlung unterzogen werden um unspezifische "Chloride" zu entfernen, wobei dabei ein Adsorptionsmittel verwendet wird, z.B. CaO.

Es ist daher Aufgabe der Erfindung, Möglichkeiten für eine einfache und sichere Separation von in entsprechendem Abgas enthaltener Säure anzugeben.

Erfindungsgemäß wird diese Aufgabe mit einem Verfahren, dass die Merkmale des Anspruchs 1 aufweist, gelöst. Vorteilhafte Ausgestaltungen und Weiterbildungen der Erfindung können mit in abhängigen Ansprüchen bezeichneten Merkmalen realisiert werden.

Bei dem erfindungsgemäßen Verfahren wird so vorgegangen, dass Abgase, die bei einer thermischen Bearbeitung von Kunststoff freigesetzt werden, mittels eines Unterdruckerzeugers aus einem Arbeitsbereich, in dem die thermische Bearbeitung durchgeführt wird, über eine Leitung in mindestens eine Filterkammer durch mindestens ein in der Filterkammer angeordnetes erstes Filterelement strömt und behandeltes Abgas aus der Filterkammer abgeführt wird.

Dabei wird dem Abgas vor Eintritt in die Filterkammer ein trockenes Pulvergemisch, in dem mindestens 40 Masse-% Ca(OH)₂ und/oder CaO und als Rest weitere Oxide enthalten sind, zugegeben, so dass sich mit dem Pulver an der Oberfläche des mindestens einen ersten Filterelements ein Filterkuchen ausbildet.

Dabei wird mit dem im Filterkuchen enthaltenen Ca(OH)₂ und/oder CaO im Abgas enthaltene Säure erst mit dem Pulvergemisch adsorbiert und dann reagiert die Säure mit dem Ca(OH)₂ und/oder CaO chemisch und ein Salz von Ca wird gebildet.

Dabei sollte man unter trocken ein Pulvergemisch verstehen, in dem maximal 5 Masse-%, bevorzugt maximal 3 Masse-% Wasser enthalten sind.

Nach Erreichen eines zweiten vorgegebenen Drucks in der Filterklammer, vor dem mindestens einen ersten Filterelement infolge wachsender Schichtdicke des Filterkuchens und/oder dem Erreichen einer zweite vorgegebenen Schichtdicke des Filterkuchens wird eine Abreinigung des Filterkuchens mit mindestens einem Druckstoß von komprimiertem Gas, das durch das mindestens eine erste Filterelement in einer der Strömungsrichtung des Abgases entgegengesetzten Richtung, durchgeführt, wodurch Teile des Filterkuchens von der Oberfläche des ersten Filterelements gelöst und in einen Sammelbehälter überführt werden.

Säure enthaltendes Abgas sollte bevorzugt ausschließlich zu Zeiten dem mindestens einen Filterelement zugeführt werden, bei denen ein erster vorgegebener Druck in der Filterkammer in Strömungsrichtung des Abgases vor dem mindestens einen Filterelement und/oder eine erste vorgegebene Schichtdicke des Filterkuchens nicht überschritten worden ist/sind.

Mit dieser Vorgehensweise kann erreicht werden, dass eine ausreichende Verweilzeit zumindest der Säure im Filterkuchen erreicht worden ist, innerhalb derer die chemische Reaktion von Säure und Ca(OH)₂ zum jeweiligen Salz in ausreichendem Maß ablaufen kann und zumindest der größte Teil der im Abgas enthaltenen Säure chemisch umgewandelt worden ist. Diese Verweilzeit sollte mindestens 0,1 s bis 0,9 s betragen.

Dabei ist/sind der zweite vorgegebene Druck größer als der erste vorgegebene Druck und/oder es ist die zweite Schichtdicke größer als die erste vorgegebene Schichtdicke.

Bis zum Erreichen des ersten vorgegebenen Drucks und/oder der ersten vorgegebenen Schichtdicke kann Pulvergemisch mittels angesaugter Umgebungsluft oder eines Gases dem mindestens einen ersten Filterelement zugeführt werden, bis sich an der Oberfläche des mindestens einen Filterelements ein Filterkuchen mit der ersten vorgegebenen Schichtdicke ausgebildet und/oder der erste vorgegebene Druck erreicht worden ist/sind.

Vorteilhaft ist es auch, wenn man das bei der thermischen Behandlung gebildete Abgas durch eine Kammer, die in der Leitung vor der Filterkammer angeordnet ist, führt. Dabei sollte die Kammer eine größere freie Querschnittsfläche, durch die Abgas strömt, aufweisen, als die freie Querschnittsfläche der Leitung. Dadurch können im Abgas enthaltene heiße Partikel infolge der reduzierten Strömungsgeschwindigkeit in der Kammer abgekühlt werden. Außerdem kann so das Pulvergemisch besser verteilt dem Abgas zugeführt werden. Es können so heiße Partikel vom Filterelement fern gehalten werden. Die Kammer sollte in Strömungsrichtung sich konisch erweiternd ausgebildet sein. In Strömungsrichtung kann sie sich mit ihrer freien Querschnittsfläche auch wieder verjüngen und dadurch die freie Querschnittsfläche wieder bis zur Größe der freien Querschnittsfläche der Leitung verkleinert werden. Die Länge des Bereichs der Kammer mit der größten freien Querschnittsfläche sollte in Abhängigkeit der Strömungsgeschwindigkeit des in die Kammer einströmenden Abgases so gewählt werden, dass zumindest Partikel in der Kammer zurückgehalten werden, die zu einer Schädigung eines Filterelements führen können.

Die Leitung mit der Kammer sollte eine Länge aufweisen, so dass das Abgas auf eine Temperatur abgekühlt wird, die kleiner 50° C ist. Das Abgas sollte bei Erreichen des Filterkuchens eine Temperatur von mindestens 20° C aufweisen.

Zu Zeiten bei denen der erste vorgegebene Druck in der Filterkammer in Strömungsrichtung des Abgases vor dem mindestens einen Filterelement nicht überschritten und/oder die erste vorgegebene Schichtdicke nicht erreicht worden ist/sind und der vorgegebene zweite Druck und/oder die zweite vorgegebene Schichtdicke überschritten worden ist/sind, und dabei eine Abreinigung des ersten Filterelements erfolgt, sollte bei der thermischen Behandlung gebildetes Abgas über eine Bypassleitung oder eine weitere Leitung zu einem zweiten Filterelement geführt werden, an dem in Strömungsrichtung des Abgases vor dem zweiten Filterelement der erste vorgegebene Druck und/oder die erste vorgegebene Schichtdicke überschritten worden ist/sind.

Durch eine so erreichbare Umschaltung von Filterelementen, die für die Separation momentan genutzt werden, kann ein kontinuierlicher Betrieb, kann auch in Abreinigungsphasen oder in Zeiten bei denen ein Filterelement ausgetauscht werden muss, erreicht werden.

Es kann ein trockenes Pulvergemisch zugeführt werden, in dem mindestens 20 Masse-% SiO₂ enthalten sind.

Außerdem können im Pulvergemisch Al₂O₃, FeO, Fe₂O₃, TiO₂, CaO, K₂O, NazO, MgO und/oder weitere Oxide mit Anteilen enthalten sein, so dass neben dem Ca(OH)₂ und/oder CaO und SiO₂ 100% erreicht worden sind.

Es sollte(n) ein zweiter Druck der mindestens 20 % größer als der erste vorgegebene Druck ist und/oder eine erste Schichtdicke von mindestens 0,1 mm und eine zweite Schichtdicke von maximal 2 mm vorgegeben und bei der Durchführung des Verfahrens berücksichtigt werden.

Anstelle des ersten und zweiten vorgegebenen Drucks kann man auch einen entsprechenden Differenzdruck bei der Durchführung des Verfahrens berücksichtigen, der sich während des Betriebs in Strömungsrichtung des Abgases zwischen dem Bereich der Filterkammer vor dem jeweiligen Filterelement und nach dem Filterelement einstellt. Durch den gebildeten Filterkuchen steigt der Druck in der Filterkammer in Strömungsrichtung des Abgases vor dem jeweiligen Filterelement an, so dass sich der Differenzdruck in Bezug zum Druck in Strömungsrichtung nach dem jeweiligen Filterelement in Abhängigkeit der Schichtdicke des Filterkuchens sukzessive vergrößert. Man könnte daher auch einen ersten und einen zweiten Differenzdruck anstelle der vorab beschriebenen ersten und zweiten Drücke nutzen.

Zumindest in der jeweiligen Filterkammer sollte das zu behandelnde Abgas eine Temperatur im Bereich 20° C bis 50° C aufweisen. Dies kann man mittels einer entsprechenden Länge der Leitung durch die das Abgas bis in die Filterkammer geführt wird, unter Beachtung der Strömungsgeschwindigkeit des Abgases erreichen. Bei Bedarf kann man aber auch mindestens einen Wärmetauscher für eine Kühlung des Abgases einsetzen.

Man kann zur Bildung eines Filterkuchens ein Pulvergemisch zweier Ausgangspulver einsetzen. Dabei kann beispielsweise ein erstes Pulver mit einer Gesamtzusammensetzung von 71 Masse-% SiO₂, 8,4 Masse-% Fe₂O₃, 10,5 Masse-% Al₂O₃, 1,4 Masse-% TiO₂, 2,5 Masse-% CaO, 2,1 Masse-% K₂O + Na₂O, 1,6 Masse-% MgO und 1,1 Masse-% weitere Oxide mit einem weiteren Pulver folgender Zusammensetzung: 96 Masse-% CaO, 0,5 Masse-% MgO und SO₃ mit 0,03 Masse-% sowie weiteren Oxiden einsetzen. Beide Pulver können im Verhältnis 1 : 1 homogen vermischt zum Einsatz kommen, um mit der Mischung einen Filterkuchen bilden zu können. Das Verhältnis in der Mischung kann aber auch um ± 10 % schwanken.

Ein bei der Erfindung eingesetztes Pulvergemisch sollte mit Partikeln, die eine mittlere Partikelgröße dso im Bereich ca. 10 µm bis ca. 250 µm aufweisen, gebildet sein.

Nachfolgend soll die Erfindung anhand eines Beispiels näher erläutert werden.

Dabei Zeigt:

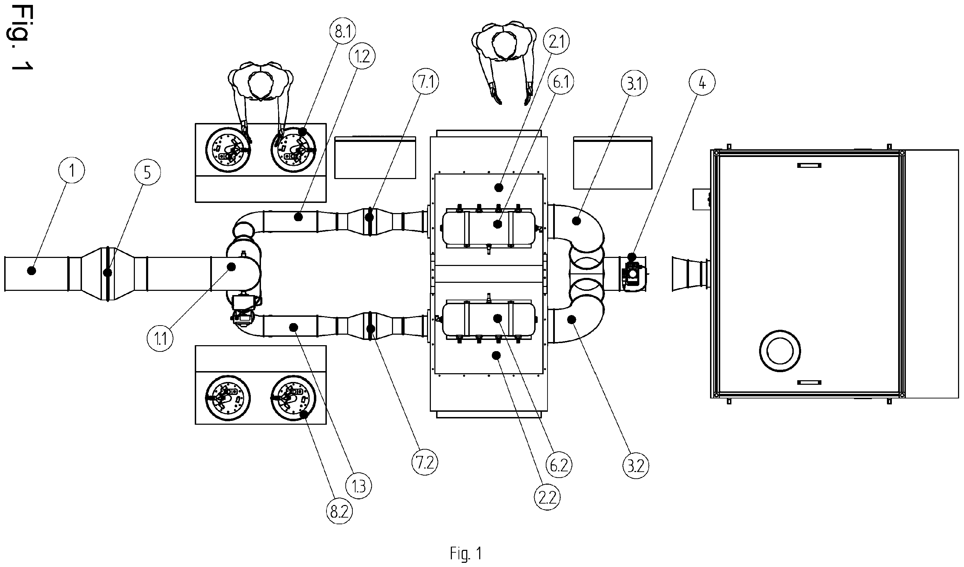

Figur 1 in schematischer Form ein Beispiel einer Vorrichtung, mit der das erfindungsgemäße Verfahren durchgeführt werden kann.

In Figur 1 ist ein Beispiel einer Vorrichtung in einer Ansicht von oben gezeigt, die geeignet ist, das erfindungsgemäße Verfahren durchzuführen.

Dabei ist eine Leitung 1 von einem nicht gezeigten Arbeitsbereich, in dem eine thermische Behandlung von Kunststoff durchgeführt wird, zu einer Verzweigung 1.1 geführt, von der Verzeigung geht jeweils eine weitere Leitung 1.2 und 1.3 ab, die zu jeweils einer Filterkammer 2.1 und 2.2 geführt sind.

An die Filterkammern 2.1 und 2.2 ist jeweils saugseitig eine Abführleitung 3.1 und 3.2 angeschlossen, mit der nachbehandeltes Abgas nach Durchströmung des jeweiligen Filterelements 6.1 und 6.2, die in einer der Filterkammern 2.1 und 2.2 angeordnet ist, mithilfe eines Unterdruckerzeugers 4 abgeführt werden kann.

In der Leitung 1 ist eine Kammer 5 angeordnet, die eine im Vergleich zur Leitung 1 eine vergrößerte freie Querschnittsfläche aufweist, so dass sich dort die Strömungsgeschwindigkeit des Abgases verringert. Man kann die Kammer 5 auch als Funkenfalle bezeichnen, da sie auch geeignet sein kann sehr heiße Partikel zu kühlen. Dadurch kann einer Schädigung eines Filterelements 6.1 und 6.2 entgegnet werden. Der Eingang und der Ausgang der Kammer 5 sind konisch ausgebildet, um starke Verwirbelungen zu vermeiden.

Des Weiteren sind zwei Dosiereinrichtungen 8.1 und 8.2 vorhanden, die über nicht gezeigte Leitungen mit den weiteren Leitungen 1.2 und 1.3 verbunden sind, und über die das jeweilige Pulvergemisch dem Abgasstrom oder einem Gas oder Umgebungsluft zugeführt werden kann, so dass sich mit der jeweiligen angesaugten Gasströmung Filterkuchen mit dem Pulvergemisch auf einem jeweiligen Filterelement 6.1 oder 6.2 ausbilden können.

Bevorzugt erfolgt die Zudosierung in Zwischenkammern 7.1 und 7.2, die in die weiteren Leitungen 1.2 und 1.3 eingebunden sind, und die jeweils eine größere freie Querschnittsfläche aufweisen, als die weiteren Leitungen 1.2 und 1.3, so dass sich die Strömungsgeschwindigkeit das Abgases oder der Umgebungsluft bzw. eines Gases in den Zwischenkammern 7.1 und 7.2 reduziert, bevor sie sich wieder nach bzw. beim Durchlaufen der Zwischenkammern 7.1 und 7.2 erhöht, um dann Abgas oder Umgebungsluft oder ein Gas mit dem Pulvergemisch beladen in die jeweilige Filterkammer 2.1 bzw. 2.2 zuzuführen und am entsprechenden Filterelement 6.1 bzw. 6.2 einen Filterkuchen bilden zu können.

In den Dosiereinrichtungen 8.1 und 8.2 sind bei diesem Beispiel zwei Pulverbehälter vorhanden, in denen jeweils ein Pulver oder Pulvergemisch enthalten ist. Dabei kann in den Pulverbehältern bereits das fertige Pulvergemisch enthalten sein, mit dem Filterkuchen gebildet werden soll. Es können aber auch unterschiedliche Pulver in den Pulverbehältern enthalten sein, die bei der Zudosierung miteinander in einem gewünschten Verhältnis vermischt werden. Dies hätte den Vorteil, dass man die Pulverzusammensetzung des Pulvergemischs, mit dem die Filterkuchen gebildet werden, anpassen kann.

In den Filterkammern 2.1 und 2.2 sind bei diesem Beispiel Drucksensoren (nicht gezeigt) in Strömungsrichtung vor den Filterelementen 6.1 und 6.2 angeordnet, mit denen die ersten und zweiten vorgegebenen Drücke bestimmt werden können.

Mit den gemessenen Drücken kann mittels mindestens einer elektronischen Regeleinheit (nicht gezeigt) eine Umlenkung des Abgasstromes erreicht werden, so dass nachzubehandelndes Abgas entweder in die weitere Leitung 1.2 oder 1.3 und von dort in die jeweilige zugehörige Filterkammer 2.1 oder 2.2 strömen kann.

Diese Umlenkung erfolgt dann in Abhängigkeit der bestimmten ersten und zweiten vorgegebenen Drücke, wie dies im allgemeinen Teil der Beschreibung erläutert worden ist. Sie kann beispielsweise mit einem Stellglied (z.B. einem Ventil), das in oder in Strömungsrichtung des Abgases vor dem Verteiler 1.1 angeordnet ist, erreicht werden.

Die Abreinigung der Filterkuchen kann ebenfalls, wie im allgemeinen Teil der Beschreibung erläutert, durchgeführt werden.

In Phasen in denen kein oder ein Filterkuchen mit noch nicht ausreichender Schichtdicke auf einem Filterelement 6.1 oder 6.2 ausgebildet ist oder eine Abreinigung eines Filterelements 6.1 oder 6.2 erfolgt ist, soll kein Abgas in die jeweilige Filterkammer 2.1 oder 2.1 zugeführt werden. In diesen Zeiträumen kann Pulvergemisch in die entsprechende weitere Leitung zu dosiert werden, wobei dann Umgebungsluft oder ein Gas, in dem keine Säure enthalten sein sollte, durch die jeweilige weitere Leitung 1.2 oder 1.3 in die jeweilige Filterkammer 2.1 oder 2.2 strömt, um dort einen Filterkuchen am jeweiligen Filterelement 6.1 oder 6.2 auszubilden, der eine ausreichende Schichtdicke aufweist. Wenn dies erreicht worden ist, kann der angesaugte Abgasstrom umgelenkt und in die jeweilige andere weitere Leitung 1.2 oder 1.3 zur jeweiligen Filterkammer 2.1 oder 2.2 einströmen, um dort die Abgasnachbehandlung und Säureumwandlung durchzuführen, bis der entsprechende Filterkuchen eine Schichtdicke erreicht hat, ab der eine Abreinigung des entsprechenden Filterelements 6.1 oder 6.2 erforderlich ist.

So kann eine relativ kontinuierliche Abgasnachbehandlung durchgeführt werden. Selbstverständlich können auch mehr als zwei weitere Leitungen 1.2 und 1.3, Filterkammern 2.1 und 2.2, Dosiereinrichtungen 8.1 und 8.2 sowie Filterelemente 6.1 und 6.2 eingesetzt werden, die nacheinander in einer Parallelschaltung betrieben werden können.

Allein oder zusätzlich zur Berücksichtigung der vorgegebenen Drücke kann man auch entsprechend die jeweilige Schichtdicke der Filterkuchen auf den Oberflächen der Filterelemente 6.1 und 6.2 mit in der Figur 1 ebenfalls nicht gezeigten Schichtdickensensoren berücksichtigen, um Säure in ausreichendem Maß zu behandeln und Schäden an Filterelementen zu vermeiden und dabei möglichst auch einen kontinuierlichen Betrieb zu ermöglichen, indem mehrere Filterelemente unabhängig voneinander genutzt werden können.

## Patentansprüche

1. Verfahren zur Abgasbehandlung von Abgasen, die bei einer thermischen Bearbeitung von Kunststoff freigesetzt werden, bei dem freigesetztes Abgas mittels eines Unterdruckerzeugers (4) aus einem Arbeitsbereich über eine Leitung (1) in mindestens eine Filterkammer (2.1, 2.2) durch mindestens ein in der Filterkammer (2.1, 2.2) angeordnetes erstes Filterelement (6.1, 6.2) strömt und behandeltes Abgas aus der Filterkammer (2.1, 2.2) abgeführt wird, wobei
dem Abgas vor Eintritt in die Filterkammer (2.1, 2.2) ein trockenes Pulvergemisch, in dem mindestens 40 Masse-% Ca(OH)₂ und/oder CaO und als Rest weitere Oxide enthalten sind, zugegeben wird, so dass sich mit dem Pulver an der Oberfläche des mindestens einen ersten Filterelements (6.1, 6.2) ein Filterkuchen ausbildet, und dabei mit dem im Filterkuchen enthaltenen Ca(OH)₂ im Abgas enthaltene Säure erst mit dem Pulvergemisch adsorbiert und dann die Säure mit dem Ca(OH)₂ und/oder CaO chemisch reagiert und ein Salz von Ca gebildet wird und
nach Erreichen eines zweiten vorgegebenen Drucks in der Filterklammer (2.2, 2.2), vor dem mindestens einen ersten Filterelement (6.1, 6.2) infolge wachsender Schichtdicke des Filterkuchens und/oder dem Erreichen einer zweiten vorgegebenen Schichtdicke des Filterkuchens eine Abreinigung des Filterkuchens mit mindestens einem Druckstoß von komprimiertem Gas, das durch das mindestens eine erste Filterelement (6.1, 6.2) in einer der Strömungsrichtung des Abgases entgegengesetzten Richtung, wodurch Teile des Filterkuchens von der Oberfläche des mindestens einen ersten Filterelements (6.1, 6.2) gelöst und in einen Sammelbehälter überführt werden, durchgeführt wird.

2. Verfahren nach Anspruch 1, **dadurch gekennzeichnet, dass** Säure enthaltendes Abgas ausschließlich zu Zeiten dem mindestens einen Filterelement (6.1, 6.2) zugeführt wird, bei denen ein erster vorgegebener Druck in der Filterkammer (2.1, 2.2) in Strömungsrichtung des Abgases vor dem mindestens einen Filterelement (6.1, 6.2) und/oder eine erste vorgegebene Schichtdicke des Filterkuchens überschritten worden ist/sind.

3. Verfahren nach einem der vorhergehenden Ansprüche, **dadurch gekennzeichnet, dass** Säure enthaltendes Abgas ausschließlich zu Zeiten dem mindestens einen Filterelement (6.1, 6.2) zugeführt wird, bei denen eine Verweilzeit von mindestens 0,1 s bis 0,9 s der mit Säure, die mit dem Abgas dem Filterkuchen zugeführt wird, im Filterkuchen eingehalten wird.

4. Verfahren nach dem vorhergehenden Anspruch, **dadurch gekennzeichnet, dass** bis zum Erreichen des ersten vorgegebenen Drucks und/oder der ersten vorgegebenen Schichtdicke auf der Oberfläche des mindestens einen Filterelements (6.1, 6.2) Pulvergemisch mittels angesaugter Umgebungsluft oder eines Gases dem mindestens einen ersten Filterelement (6.1) zugeführt wird.

5. Verfahren nach einem der vorhergehenden Ansprüche, **dadurch gekennzeichnet, dass** das bei der thermischen Behandlung gebildete Abgas durch eine Kammer (5), die in der Leitung vor der Filterkammer (2.1, 2.2) angeordnet ist, geführt wird, wobei die Kammer (5) eine größere freie Querschnittsfläche, durch die Abgas strömt, aufweist, als die freie Querschnittsfläche der Leitung.

6. Verfahren nach einem der vorhergehenden Ansprüche, **dadurch gekennzeichnet, dass** zu Zeiten bei denen der erste vorgegebene Druck in der Filterkammer (2.1, 2.2) in Strömungsrichtung des Abgases vor dem mindestens einen Filterelement (6.1, 6.2) nicht überschritten und/oder die erste vorgegebene Schichtdicke nicht erreicht worden ist/sind und der vorgegebene zweite Druck und/oder die zweite vorgegebene Schichtdicke überschritten worden ist/sind und dabei eine Abreinigung des ersten Filterelements (6.1, 6.2) erfolgt, bei der thermischen Behandlung gebildetes Abgas über eine Bypassleitung oder eine weitere Leitung (1.3) zu einem zweiten Filterelement ( 6.2) geführt wird, an dem in Strömungsrichtung des Abgases vor dem zweiten Filterelement (6.2) der erste vorgegebene Druck und/oder die erste vorgegebene Schichtdicke überschritten worden ist.

7. Verfahren nach einem der vorhergehenden Ansprüche, **dadurch gekennzeichnet, dass** ein trockenes Pulvergemisch zugeführt wird, in dem mindestens 20 Masse-% SiO₂ enthalten sind.

8. Verfahren nach einem der vorhergehenden Ansprüche, **dadurch gekennzeichnet, dass** das im Filterkuchen enthaltene Ca(OH)₂ und/oder CaO mit HCl zu CaCl oder mit H₂SO₄ zu CaSO₄ chemisch reagiert.

9. Verfahren nach einem der vorhergehenden Ansprüche, **dadurch gekennzeichnet, dass** ein zweiter Druck, der mindestens 20 % Größer als der erste vorgegebene Druck ist und/oder eine erste Schichtdicke von mindestens 0,1 mm und eine zweite Schichtdicke von maximal 2 mm vorgegeben werden.

## Claims

1. A method for exhaust gas treatment of exhaust gases which are released during thermal processing of plastic, in which released exhaust gas flows by means of a vacuum generator (4) from a working region via a line (1) into at least one filter chamber (2.1, 2.2) through at least one first filter element (6.1, 6.2) arranged in the filter chamber (2.1, 2.2) and treated exhaust gas is discharged from the filter chamber (2.1, 2.2), wherein
a dry powder mixture, in which at least 40% by mass of Ca(OH)₂ and/or CaO and the remainder of further oxides are contained, is added to the exhaust gas before entry into the filter chamber (2.1, 2.2), so that a filter cake is formed with the powder on the surface of the at least one first filter element (6.1, 6.2), and acid contained in the exhaust gas is first adsorbed with the powder mixture with the Ca(OH)₂ contained in the filter cake and then the acid reacts chemically with the Ca(OH)₂ and/or CaO and a salt of Ca is formed and
after reaching a second predetermined pressure in the filter chamber (2.2, 2.2), before the at least one first filter element (6.1, 6.2) as a result of increasing layer thickness of the filter cake and/or reaching a second predetermined layer thickness of the filter cake, cleaning of the filter cake with at least one pressure surge of compressed gas which passes through the at least one first filter element (6.1, 6.2) in a direction opposite to the direction of flow of the exhaust gas, whereby parts of the filter cake are detached from the surface of the at least one first filter element (6.1, 6.2) and transferred to a collecting container.

2. The method according to claim 1, **characterized in that** acid-containing exhaust gas is fed to the at least one filter element (6.1, 6.2) exclusively at times at which a first predetermined pressure in the filter chamber (2.1, 2.2) in the direction of flow of the exhaust gas upstream of the at least one filter element (6.1, 6.2) and/or a first predetermined layer thickness of the filter cake has/have been exceeded.

3. The method according to one of the preceding claims, **characterized in that** acid-containing exhaust gas is fed to the at least one filter element (6.1, 6.2) exclusively at times at which a residence time of at least 0.1 s to 0.9 s of the acid, which is fed to the filter cake with the exhaust gas, is maintained in the filter cake.

4. The method according to the preceding claim, **characterized in that**, until the first predetermined pressure and/or the first predetermined layer thickness on the surface of the at least one filter element (6.1, 6.2) is reached, powder mixture is fed to the at least one first filter element (6.1) by means of aspirated ambient air or a gas.

5. The method according to one of the preceding claims, **characterized in that** the exhaust gas formed during the thermal treatment is passed through a chamber (5) which is arranged in the line upstream of the filter chamber (2.1, 2.2), the chamber (5) having a larger free cross-sectional area, through which exhaust gas flows, than the free cross-sectional area of the line.

6. The method according to one of the preceding claims, **characterized in that** at times at which the first predetermined pressure in the filter chamber (2.1, 2.2) in the direction of flow of the exhaust gas upstream of the at least one filter element (6.1, 6.2) has/have not been exceeded and/or the first predetermined layer thickness has/have not been reached and the predetermined second pressure and/or the second predetermined layer thickness has/have been exceeded and cleaning of the first filter element (6.1, 6.2) takes place, exhaust gas formed during the thermal treatment is conducted via a bypass line or a further line (1.3) to a second filter element (6.2) at which the first predetermined pressure and/or the first predetermined layer thickness has/have been exceeded in the direction of flow of the exhaust gas upstream of the second filter element (6.2).

7. The method according to one of the preceding claims, **characterized in that** a dry powder mixture is supplied, in which at least 20 % by mass of SiO₂ are contained.

8. The method according to one of the preceding claims, **characterized in that** the Ca(OH)₂ and/or CaO contained in the filter cake reacts chemically with HCl to form CaCl or with H₂SO₄ to form CaSO₄.

9. The method according to one of the preceding claims, **characterized in that** a second pressure which is at least 20% greater than the first predetermined pressure and/or a first layer thickness of at least 0.1 mm and a second layer thickness of at most 2 mm are predetermined.

## Revendications

1. Procédé de traitement de gaz d'échappement, qui sont libérés lors d'un usinage thermique de matière plastique, selon lequel le gaz d'échappement libéré s'écoule au moyen d'un générateur de dépression (4) à partir d'une zone de travail par une conduite (1) dans au moins une chambre de filtration (2.1, 2.2) à travers au moins un premier élément de filtration (6.1, 6.2) disposé dans la chambre de filtration (2.1, 2.2) et le gaz d'échappement traité est évacué de la chambre de filtration (2.1, 2.2), dans lequel
un mélange de poudres sèches, dans lequel sont contenus au moins 40 % en masse de Ca(OH)₂ et/ou de CaO, le reste étant constitué d'autres oxydes, est ajouté au gaz d'échappement avant son entrée dans la chambre de filtration (2.1, 2.2), de sorte qu'un gâteau de filtre se constitue avec la poudre, à la surface de l'au moins un premier élément de filtration (6.1, 6.2), et l'acide contenu dans le gaz d'échappement est d'abord adsorbé avec le mélange de poudre avec le Ca(OH)₂ contenu dans le gâteau de filtre, puis l'acide réagit chimiquement avec le Ca(OH)₂ et/ou le CaO et un sel de Ca est formé et
après l'atteinte d'une deuxième pression prédéfinie dans la chambre de filtration (2.2, 2.2), en amont de l'au moins un premier élément de filtration (6.1, 6.2) en raison de l'épaisseur croissante de la couche du gâteau de filtre et/ou l'atteinte d'une deuxième épaisseur de couche prédéfinie du gâteau de filtre, un décolmatage du gâteau de filtre avec au moins un coup de pression de gaz comprimé, qui traverse l'au moins un premier élément de filtration (6.1, 6.2) dans une direction opposée à la direction d'écoulement du gaz d'échappement, ce qui permet de détacher des parties du gâteau de filtre de la surface de l'au moins un premier élément de filtration (6.1, 6.2) et de les transférer dans un récipient collecteur, est effectué.

2. Procédé selon la revendication 1, **caractérisé en ce que** le gaz d'échappement contenant de l'acide est amené à l'au moins un élément de filtration (6.1, 6.2) exclusivement à des moments où une première pression prédéfinie dans la chambre de filtration (2.1, 2.2) dans la direction d'écoulement du gaz d'échappement en amont de l'au moins un élément de filtration (6.1, 6.2) et/ou une première épaisseur de couche prédéfinie du gâteau de filtre a/ont été dépassée(s).

3. Procédé selon l'une quelconque des revendications précédentes, **caractérisé en ce que** le gaz d'échappement contenant de l'acide est amené à l'au moins un élément de filtration (6.1, 6.2) exclusivement à des moments où un temps de séjour d'au moins 0,1 s à 0,9 s avec l'acide, qui est amené au gâteau de filtre avec le gaz d'échappement, est respecté dans le gâteau de filtre.

4. Procédé selon la revendication précédente, **caractérisé en ce que**, jusqu'à ce que la première pression prédéfinie et/ou la première épaisseur de couche prédéfinie soit atteinte sur la surface de l'au moins un élément de filtration (6.1, 6.2), un mélange de poudres est amené à l'au moins un premier élément de filtration (6.1) au moyen d'air ambiant aspiré ou d'un gaz.

5. Procédé selon l'une quelconque des revendications précédentes, **caractérisé en ce que** le gaz d'échappement formé lors du traitement thermique est conduit à travers une chambre (5), qui est disposée dans la conduite en amont de la chambre de filtration (2.1, 2.2), dans lequel la chambre (5) présente une surface de section libre à travers laquelle le gaz d'échappement s'écoule supérieure à la surface de section libre de la conduite.

6. Procédé selon l'une quelconque des revendications précédentes, **caractérisé en ce que**, aux moments où la première pression prédéfinie dans la chambre de filtration (2.1, 2.2) dans la direction d'écoulement du gaz d'échappement en amont de l'au moins un élément de filtration (6.1, 6.2) n'a pas été dépassée et/ou la première épaisseur de couche prédéfinie n'a pas été atteinte et la deuxième pression prédéfinie et/ou la deuxième épaisseur de couche prédéfinie a été dépassée et ce faisant un décolmatage du premier élément de filtration (6.1, 6.2) s'effectue, le gaz d'échappement formé lors du traitement thermique est amené par une conduite de dérivation ou une autre conduite (1.3) à un deuxième élément de filtration (6.2), au niveau duquel la première pression prédéfinie et/ou la première épaisseur de couche prédéfinie a été dépassée dans la direction d'écoulement du gaz d'échappement avant le deuxième élément de filtration (6.2).

7. Procédé selon l'une quelconque des revendications précédentes, **caractérisé en ce qu'**un mélange de poudres sèches, dans lequel au moins 20 % en masse de SiO₂ sont contenus, est amené.

8. Procédé selon l'une quelconque des revendications précédentes, **caractérisé en ce que** le Ca(OH)₂ et/ou CaO contenu dans le gâteau de filtre réagit chimiquement avec HCl pour former CaCI ou avec H₂SO₄ pour former CaSO₄.

9. Procédé selon l'une quelconque des revendications précédentes, **caractérisé en ce qu'**une deuxième pression, qui est au moins 20 % supérieure à la première pression prédéfinie et/ou une première épaisseur de couche d'au moins 0,1 mm et une deuxième épaisseur de couche d'au maximum 2 mm sont prédéfinies.
